Europäisches Patentamt

European Patent Office

Office européen des brevets

(11) Numéro de publication : **0 052 029 B1**

(12) **FASCICULE DE BREVET EUROPÉEN**

(45) Date de publication du fascicule du brevet :
09.01.85

(51) Int. Cl.⁴ : **G 01 B  5/00**

(21) Numéro de dépôt : **81401603.6**

(22) Date de dépôt : **15.10.81**

(54) **Dispositif modulaire de contrôle dimensionnel automatique de pièces de révolution.**

(30) Priorité : **06.11.80 FR 8023746**

(43) Date de publication de la demande :
**19.05.82 Bulletin 82/20**

(45) Mention de la délivrance du brevet :
**09.01.85 Bulletin 85/02**

(84) Etats contractants désignés :
**BE CH DE GB IT LI SE**

(56) Documents cités :
**FR-A- 2 276 558**
**GB-A-  746 860**
**US-A- 3 974 569**
**US-A- 4 049 123**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Gluza, Roland**
**49, rue des Ebissoires**
**F-78370 Plaisir (FR)**

(74) Mandataire : **Srour, Elie et al**
**8 & 10 Avenue Emile Zola**
**F-92109 Boulogne Billancourt (FR)**

Jouve, 18, rue St-Denis, 75001 Paris, France

## Description

L'invention concerne le contrôle dimensionnel d'une série de pièces de révolution en cours de fabrication ou de montage de cette série de pièces.

Pour résoudre ce problème, et à part naturellement le contrôle manuel des pièces sur un banc de mesure, on connaît un dispositif de contrôle dimensionnel automatique de pièces de révolution, du type comportant un bâti sur lequel sont montés : une broche mobile en rotation et translation et portant un mandrin de prise et d'entraînement des pièces, une goulotte amenant les pièces une par une devant le mandrin, et des palpeurs de contrôle positionnés avec précision par rapport au mandrin.

De telles machines ont cependant un caractère spécifique, c'est-à-dire sont étudiées et réglées minutieusement pour un type de pièce déterminée et ne permettent pas de passer aisément ni rapidement d'un type de pièce à un autre. En effet, dans ce cas il est nécessaire en général de changer la goulotte d'arrivée des pièces pour l'adapter aux nouvelles pièces, et également de changer le nombre et le type de palpeurs ainsi que leur support et surtout leur réglage, ce qui demande un temps assez long.

Le but de l'invention est d'éliminer les inconvénients précédents en réalisant une machine de contrôle dimensionnel automatique qui permette de passer aisément et rapidement d'un type de pièce à un autre pour conserver ainsi un caractère universel.

Dans ce but l'invention propose un dispositif caractérisé par le fait que la goulotte est réglable pour s'adapter en hauteur, en largeur et en inclinaison à divers type de pièces, que le bâti est en forme de parallélépipède creux comportant plusieurs faces de référence ajourées usinées avec précision sur lesquelles sont montés divers modules dont un module de présentation comprenant une base se fixant avec précision sur une desdites faces du bâti et des moyens solidaires de cette base pour supporter la broche du mandrin et au moins un module de contrôle comprenant un cadre venant se fixer avec précision sur une autre desdites faces du bâti et des moyens réunis avec ledit cadre pour supporter un ensemble d'au moins un palpeur, et pour déplacer cet ensemble alternativement entre une position de dégagement et une position de mesure.

Le changement de type de pièce peut donc se faire très rapidement par simple réglage de position et de largeur de la goulotte et par simple échange standard du ou des modules de mesure ou de leur plateau, ainsi qu'éventuellement du mandrin ou du module de présentation.

Les particularités de l'invention apparaîtront dans la description qui va suivre d'un mode de réalisation pris comme exemple et représenté sur le dessin annexé, sur lequel :

la figure 1 est une vue d'ensemble en perspective éclatée des principaux composants ;

la figure 2 est une vue en élévation à plus grande échelle du bâti et de la goulotte ;

la figure 3 est une vue en perspective à plus grande échelle du module de présentation ; et

la figure 4 est une vue en perspective à plus grande échelle d'un module de contrôle.

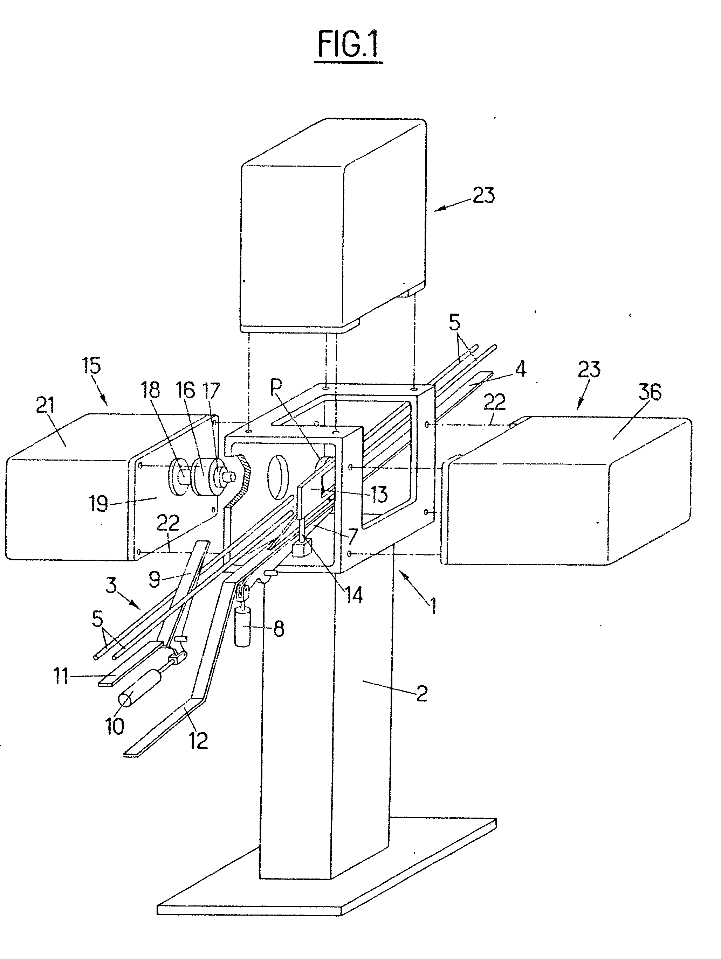

Comme on le voit sur la figure 1, le dispositif selon l'invention se compose essentiellement d'un bâti 1 sur lequel viennent se fixer un certain nombre de modules séparables et combinables.

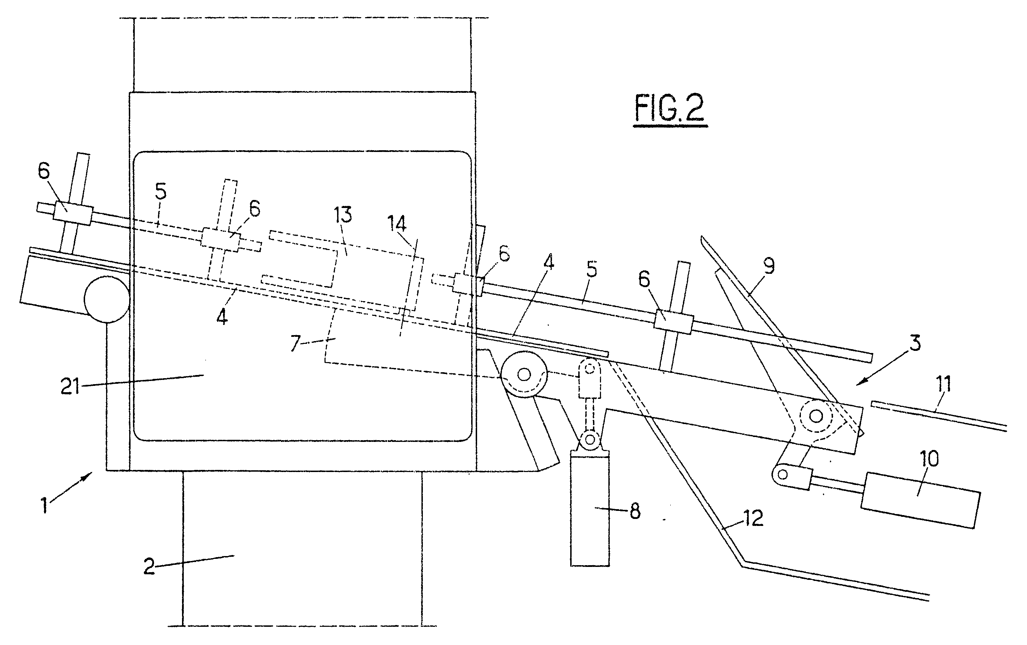

Le bâti 1 est essentiellement constitué par une structure résistante creuse de forme sensiblement parallélépipédique avec des faces ajourées. Il peut avantageusement être supporté par un pied 2. Le bâti comporte en particulier de larges ouvertures avant et arrière à travers lesquelles passe l'ensemble de goulotte 3 destiné à recevoir les pièces, à les contrôler une par une puis à les trier en fonction du résultat du contrôle. La goulotte proprement dite est constituée par un rail plat 4 constituant la surface de roulement pour les pièces de révolution, encadrée par deux tiges de guidage 5 canalisant entre elles chacune des pièces. Chacune des tiges de guidage 5 est supportée de place en place par des supports 6 (voir fig. 2) la positionnant de manière réglable en hauteur aussi bien qu'en largeur par rapport au rail 4. L'ensemble est en outre réglable par d'autres moyens de réglage non référencés dans le sens de la hauteur et en inclinaison par rapport au bâti 1.

Au voisinage du centre du bâti 1, se trouve une butée escamotable 7, par exemple en forme de secteur circulaire comme représenté sur la fig. 2, et qui peut faire saillie à travers une encoche pratiquée dans le rail 4, ou inversement s'escamoter au niveau ou en dessous du niveau de ce rail sous l'effet d'un vérin de manœuvre 8.

Le dispositif de tri est constitué essentiellement par une palette basculante 9, manœuvrée par un vérin 10 et permettant de raccorder, en position abaissée, le rail 4 avec un rail 11 situé dans le prolongement, afin d'évacuer les pièces bonnes. En position relevée, comme représenté sur les fig. 1 et 2, cette palette 9 laisse échapper les pièces vers une goulotte 12, munie également de guides latéraux non représentés, pour évacuer les pièces rebutées. La manœuvre du vérin 10 est naturellement commandée par l'opération de contrôle que l'on va voir dans la suite.

A l'emplacement du contrôle, c'est-à-dire à l'emplacement de la pièce P arrêtée par la butée 7 sur le rail 4, une des tiges 5 est interrompue et remplacée par une fourchette 13 d'appui de la pièce. Cette fourchette est montée par exemple pivotante autour d'un axe 14 et actionné par un dispositif approprié pour s'écarter légèrement de l'appui de la pièce pendant la mesure. Cette commande peut en particulier être combinée avec le mouvement de la butée 7 pour être actionnée par le même vérin 8.

Mis à part la face inférieure occupée par le pied, et les faces avant et arrière ajourées pour le passage de l'ensemble de goulotte 3 comme on vient de le voir, le bâti 1 comporte également trois faces de référence usinées avec précision pour permettre le montage précis de divers modules.

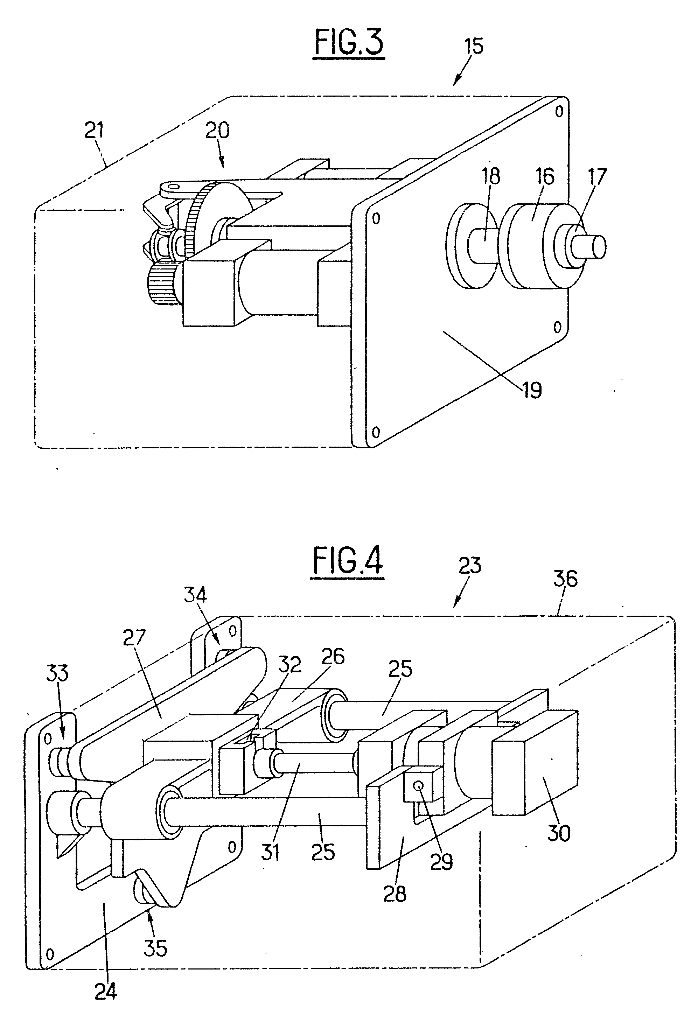

Le premier de ces modules est le module 15 de présentation de la pièce qui a pour fonction de prendre la pièce arrêtée au poste de contrôle, de la positionner avec précision par rapport au bâti 1 et de l'orienter ou de l'entraîner en rotation autour de son axe de révolution pour permettre l'action successive des palpeurs de mesure (mesure de voile ou faux-rond). Ce module 15 est représenté en détail sur la fig. 3. Il comporte essentiellement un mandrin de centrage 16 assurant la préhension de la pièce P, par l'intérieur ou par l'extérieur avec une surface de référence 17 précise s'appuyant sur la pièce, soit sur une face de celle-ci, soit sur une face en embrèvement, cette face d'appui pour la pièce pouvant également être fixe au lieu d'être portée par le mandrin selon les types d'application.

Ce mandrin 16 est porté par une broche 18 susceptible de tourner avec précision dans des paliers et de coulisser axialement dans ces paliers. Naturellement, la précision de cette broche et de ces paliers conditionne la précision des mesures envisagées. Ces paliers sont portés par une base 19 usinée avec précision et venant se fixer de manière précise sur une des faces de référence du bâti 1. Cette face est généralement constituée par la face verticale opposée à la fourchette 13 pour des pièces roulant sur le rail 4 par leur surface cylindrique extérieure et par conséquent avec leur axe de révolution horizontal, mais le module pourrait également être fixé sur la face supérieure du bâti 1 pour des pièces glissant sur le rail 4 avec leur axe de révolution vertical.

Le mandrin 16 et l'extrémité de la broche 18 pénètrent à travers la face de référence correspondante du bâti 1 à travers les ajourages représentés, et du côté extérieur, le module comporte les moyens d'entraînement en rotation et en translation de la broche 18, ainsi que les moyens d'actionnement du dispositif de préhension du mandrin 16. Ce mécanisme désigné dans son ensemble par 20 est de type connu et il se trouve enfermé à l'intérieur d'un carter 21 pour constituer un ensemble protégé et facilement manipulable.

Naturellement, la fixation précise de la base 19 sur la face de référence correspondante du bâti 1 se fait par tout moyen approprié, en particulier au moyen de boulons 22 avec appui plan sur plan et repérage précis dans ce plan à l'aide de butées ou de pieds de centrage d'une manière usuelle.

Un autre module est constitué par le module de mesure 23 représenté en détail sur la fig. 4. Ce module 23 comporte un cadre 24 constituant la base du module et destiné comme la base 19 à se fixer sur une des faces de référence du châssis 1, par exemple au moyen de boulons 22, avec repérage précis au moyen de butée ou de pieds de centrage non représentés. Ce cadre 24 comporte un moyen de guidage, constitué par exemple par deux colonnes 25 pour un coulisseau 26 qui coulisse sur ces colonnes 25, par exemple au moyen de douilles à billes, et ce coulisseau 26 porte, avec un certain degré de liberté de faible amplitude mais dans tous les sens, un plateau 27 sur lequel viennent se monter les divers palpeurs de mesure à l'aide de supports ajustables de type connu non représenté. Naturellement, ces palpeurs sont fixés sur la face du plateau tournés du côté du châssis 1, et le cadre 24, comporte, comme la face correspondante du châssis 1, un large ajourage pour permettre le passage de ces palpeurs. En particulier, le cadre 24 peut être limité à un cadre en forme de U comme représenté sur les figures.

Les extrémités des colonnes 25 opposées au cadre 24 sont réunies par une traverse 28 portant deux paliers d'articulation 29 sur lesquels s'articule un vérin 30 dont l'extrémité de la tige 31 vient s'introduire et se verrouiller latéralement dans une rainure en T 32 débouchant d'un seul côté du coulisseau 26. Cette disposition permet un dégagement rapide du vérin 30 et de sa tige 31 par basculement, ce qui autorise un déplacement manuel rapide du coulisseau 26 vers la traverse 28 pour accéder aux palpeurs pour faciliter leur installation et leur réglage.

Lors de la descente de chaque nouvelle pièce P, le plateau et ses palpeurs se trouvent rétractés par la tige 31 du vérin 30 de manière que les palpeurs se trouvent en dehors du passage de la pièce. Inversement pendant la mesure, après que la pièce P ait été prise et positionnée par le mandrin 16, l'ensemble du plateau et de ses palpeurs est amené en position précise.

La précision de ce positionnement, renouvelée à chaque opération, est obtenue en faisant reposer le plateau 27 sur le cadre 24 par l'intermédiaire de trois points 33, 34 et 35 par la technique connue dite point-trait-plan. On rappelle que cette technique consiste à positionner l'un des points, par exemple 33 au moyen d'une empreinte, par exemple sphérique, portée par une des pièces, fixe ou mobile, et venant se loger dans une autre empreinte, par exemple conique, portée par l'autre de ces pièces, de manière à assurer ainsi un positionnement précis dans les trois dimensions du point 33. Un autre point 34 comporte pareillement une empreinte, par exemple sphérique, coopérant cette fois avec une gorge, par exemple en V, rectiligne et de préférence alignée avec le point 33, ce qui fixe l'orientation de la pièce 27 dans le plan des trois points. Enfin, au troisième point 35, la butée se fait directement sur un plan pour achever de définir la position du plan du plateau 27 dans l'espace en fixant l'orientation de ce plan autour de la droite 33, 34.

Le module 23, comme le module 15, est naturellement enfermé dans un carter de protection 36 pour en faire un ensemble facilement transportable et installable. En outre, il est possible d'utiliser deux modules semblables comme représentés sur la fig. 1, le deuxième module étant fixé par exemple sur la face supérieure si celle-ci n'est pas utilisée pour le module 15. Ceci donne plus de souplesse et de possibilité aux types de mesures que l'on peut effectuer.

Bien entendu, d'une manière habituelle les palpeurs de mesure transmettent leur mesure, par exemple par voie électrique, à un dispositif qui vérifie si elles sont toutes dans les tolérances imposées, et dans l'affirmative actionne le vérin 10 en même temps que le vérin 8 pour autoriser l'évacuation de la pièce P vers les pièces bonnes. Dans le cas contraire, le vérin 8 est actionné seul pour permettre l'évacuation de la pièce P par le rail 12 vers les pièces rebutées.

Naturellement, un dispositif de distribution et de séparation de pièces non représenté, et ne faisant pas partie de la machine distribue les pièces P une par une à l'entrée de la goulotte 3, et un ensemble de commande de type habituel commande la séquence des opérations en actionnant le vérin 8 de la butée 7 pour arrêter la nouvelle pièce, le déplacement en translation de la broche 18 pour permettre la prise de la pièce par le mandrin 16, grâce à l'appui fourni par la fourchette 13, puis l'escamotage de la butée 7 simultanément avec le dégagement de la fourchette 13 comme on l'a vu, ce qui permet alors au mandrin 16 d'entraîner la pièce en rotation sur quelques tours, par exemple pour vérifier le voile ou la concentricité de la pièce. Pendant cette rotation, ou pendant la ou les positions d'arrêt de la pièce selon les cas, le ou les ensembles de palpeurs viennent agir sur la pièce pour assurer le contrôle, puis se retirent. Après cela, le mandrin 16 se rétracte et se retire pour évacuer la pièce qui roule alors vers le dispositif de tri pour être sélectionné.

L'ensemble est donc entièrement automatique et extrêmement précis. En outre, lorsque l'on veut changer de type de pièce à contrôler, il suffit de modifier éventuellement les positions et largeurs de la goulotte 3 comme on l'a vu plus haut, puis de faire un échange standard des modules de présentation 15 et de contrôle 23, ou plus simplement du mandrin 16 pour le premier et pour le second du plateau 27, ou d'une tête de mesure constituée par un plateau portant tous les palpeurs pré-réglés et venant se fixer dans son ensemble sur ce plateau 27. Ce dernier remplacement est en particulier facilité par le basculement de dégagement rapide du vérin 30 comme on l'a vu plus haut. Le même appareil permet par conséquent de contrôler très rapidement des séries de pièces très différentes.

## Revendications

1. Dispositif de contrôle dimensionnel automatique de pièce de révolution, du type comportant un bâti sur lequel sont montés : une broche (18) mobile en rotation et translation et portant un mandrin (16) de prise et d'entraînement des pièces (P), une goulotte (3) amenant les pièces une par une devant le mandrin, et des palpeurs de contrôle positionnés avec précision par rapport au mandrin, caractérisé par le fait que la goulotte (3) est réglable pour s'adapter en hauteur, en largeur et en inclinaison à divers types de pièces, que le bâti (1) est en forme de parallélépipède creux comportant plusieurs faces de référence ajourées usinées avec précision sur lesquelles sont montés divers modules (15, 23) dont un module de présentation (15) comprenant une base (19) se fixant avec précision sur une desdites faces du bâti (1) et des moyens (20) solidaires de cette base pour supporter la broche (18) du mandrin (16), et au moins un module de contrôle (23) comprenant un cadre (24) venant se fixer avec précision sur une autre desdites faces du bâti (1) et des moyens (27 à 35) réunis avec ledit cadre pour supporter un ensemble d'au moins un palpeur, et pour déplacer cet ensemble alternativement entre une position de dégagement et une position de mesure.

2. Dispositif selon la revendication 1, caractérisé par le fait que la base (19) du module de présentation (15) comporte les paliers de la broche (18) du mandrin (16) ainsi que les moyens de déplacement en translation et en rotation de cette broche et les moyens d'actionnement du mandrin, que les moyens (24) du module de contrôle (23) comportent un plateau (27) susceptible de se déplacer dans un mouvement de rétraction par rapport au bâti au moyen d'un vérin de commande approprié (30), et inversement d'être ramené en butée contre le cadre (24) sous l'effet de ce même vérin (30), le positionnement précis du plateau (27) par rapport au cadre (24) étant assuré par des moyens de positionnement, et que l'ensemble d'au moins un palpeur associé à chaque module de contrôle (23) est porté par ledit plateau (27), directement ou par l'intermédiaire d'une tête de mesure amovible se fixant avec précision sur ledit plateau.

3. Dispositif selon une des revendications 1 et 2, caractérisé par le fait qu'un vérin unique (8) assure à la fois la levée d'une butée (7) faisant saillie dans la goulotte (4, 5) pour arrêter chaque nouvelle pièce (P) en position devant le mandrin (16) et l'amenée en position de travail d'une fourchette rétractable (13) servant d'appui pour la pièce (P) lors de la pénétration du mandrin (16).

4. Dispositif selon l'une des revendications précédentes, caractérisé par le fait que ledit cadre (24) de chaque module de contrôle (23) est en forme de U dégageant la majeure partie de sa surface centrale pour le passage des palpeurs, les faces de référence du bâti (1) susceptibles de recevoir ce module ayant une forme correspondante.

5. Dispositif selon l'une quelconque des revendications précédentes, caractérisé par le fait que le mouvement de dégagement du plateau (27) de chaque module de contrôle (23) est assuré au moyen d'un coulisseau (26) coulissant sur deux colonnes de guidage (25) fixées chacune par l'une de leurs extrémités audit cadre (24) et réunies en tête opposée par une traverse (28) sur laquelle prend appui le vérin de manœuvre (30)

dont la tige (31) est reliée au coulisseau (26) portant le plateau (27).

6. Dispositif selon la revendication 5, caractérisé par le fait que ledit vérin (30) est monté basculant sur ladite traverse (28) et que la liaison entre l'extrémité de sa tige (31) et le coulisseau (26) est assurée par une tête pénétrant dans une empreinte à dégagement latéral de section semblable à une rainure en T, l'ensemble permettant, par basculement du vérin (30), à la fois la libération de la liaison entre ladite tige (31) et ledit coulisseau (26) et le dégagement de l'espace correspondant pour permettre le libre retrait à la main du coulisseau (26) en vue du réglage ou du remplacement des palpeurs ou de la tête de mesure dans son ensemble

## Claims

1. Apparatus for automatic dimensional control of members of revolution, of the type comprising a support structure on which are mounted : a spindle (18) which is rotatable and movable with a translatory movement and which carries a mandrel (16) for engaging and entraining the members (P), a chute (3) for feeding the members one by one in front of the mandrel, and control sensors which are precisely positioned with respect to the mandrel, characterised in that the chute (3) is adjustable so as to be adapted in respect of height, width and inclination to various types of members, that the support structure (1) is in the form of a hollow parallelepiped comprising a plurality of apertured reference faces which are precision-machined and on which are mounted various modules (15, 23), including a presentation module (15) having a base (19) which is fixed with precision to one of said faces of the support structure (1) and means (20) which are fixed with respect to said base to support the spindle (18) of the mandrel (16), and at least one control module (23) comprising a frame (24) which is fixed with precision to another of said faces of the support structure (1) and means (27 to 35) which are combined with said frame to support an assembly of at least one sensor and to displace said assembly alternately between a disengaged position and a measuring position.

2. Apparatus according to claim 1, characterised in that the base (19) of the presentation module (15) comprises the bearings of the spindle (18) of the mandrel (16) and the means for producing translatory and rotary movement of said spindle and the means for actuating the spindle, that the means (24) of the control module (23) comprise a plate (27) which is capable of being displaced in a retraction movement with respect to the support structure by means of a suitable actuating jack (30) and conversely returned into a position of abutment against the frame (24) under the action of said same jack (30), precise positioning of the plate (27) with respect to the frame (24) being provided by positioning means, and that the assembly of at least one sensor associated with each control module (23) is carried by said plate (27) directly of by way or a removable measuring head which is fixed with precision to said plate.

3. Apparatus according to one of claims 1 and 2, characterised in that a single jack (8) provides both for raising an abutment (7) that projects into the chute (4, 5) to stop each fresh member (P) in position in front of the mandrel (16), and for moving into the operating position a retractable fork (13) which serves as a support for the member (P) upon penetration of the mandrel (16).

4. Apparatus according to one of the preceding claims, characterised in that said frame (24) of each control module (23) is of U-shaped configuration, whereby the major part of its central surface is removed for the movement of the sensors therethrough, the reference faces of the support structure (1) which are capable of receiving said module being of a corresponding form.

5. Apparatus according to any one of the preceding claims, characterised in that the movement for disengagement of the plate (27) of each control module (23) is produced by means of a slide (26) which is slidable on two guide columns (25) which are each fixed by one of their ends to said frame (24) and which are connected at their opposite head end by a transverse member (28) on which the operating jack (30) is supported, the rod (31) of said jack being connected to the slide (26) that carries the plate (27).

6. Apparatus according to claim 5, characterised in that said jack (30) is mounted for pivotal movement on said transverse member (28) and that the connection between the end of its rod (31) and the slide (26) is formed by a head member which engages into a laterally open recess which is similar in section to a T-shaped groove, the assembly, by pivotal movement of the jack (30), permitting both the connection between said rod (31) and said slide (26) to be freed and the corresponding space to be cleared to permit the slide (26) to be freely retracted by hand for adjusting or replacing the sensors or the measuring head as a whole.

## Ansprüche

1. Vorrichtung zur automatischen Maßüberwachung sich drehender Stücke, die ein Gestell aufweist, an dem angeordnet sind : ein rotations- und translationsbeweglicher Dorn (18), der eine Drehspindel (16) zur Aufnahme und zum Antrieb der Stücke (P) trägt, eine Schurre (3), die die Stücke einzeln vor die Drehspindel führt und Kontrolltaststifte, die mit Präzision bezüglich der Drehspindel angeordnet sind, dadurch gekennzeichnet, daß die Schurre (3) einstellbar ist um sich in der Höhe, in der Breite und in der Neigung an verschiedene Arten von Stücken anzupassen, daß das Gestell (1) die Form eines hohlen Parallelepipeds hat, das mehrere durchbrochene Referenzflächen aufweist, die mit Präzision bearbeitet sind und a denen verschiedene Module (15, 23) angeordnet sind, wobei ein Ausrichtmodul (15) eine Basis (19) aufweist, die sich mit Präzision an eine der genannten Flächen des Gestells (1) abstützt und Mittel (20) aufweist, die mit dieser Basis fest verbunden sind um den Dorn (18) der Drehspindel (16) zu tragen und daß wenigstens ein Kontrollmodul (23), das einen Rahmen (24) aufweist, sich mit Präzision an einer anderen der genannten Flächen des Gestells (1) abstützt und Mittel (27 bis 35) aufweist, die mit diesem Rahmen vereinigt sind um eine Gesamtheit zu tragen aus wenigstens einem Taststift und zum Verschieben dieser Gesamtheit abwechselnd zwischen einer Freigabestellung und einer Meßstellung.

2. Vorrichtung nach Anspruch 1, dadurch gekennzeichnet, daß die Basis (19) des Ausrichtmoduls (15) Lager für den Dorn (18) der Drehspindel (16) aufweist sowie Mittel zur Translations- und Rotationsverschiebung dieses Dorns sowie Betätigungsmittel für die Drehspindel, daß die Mittel (24) des Kontrollmoduls (23) eine Platte (27) aufweisen, die in der Lage ist, eine Entfernungsverschiebung bezüglich des Gestells mittels eines geeigneten Steuerventils (30) durchzuführen und umgekehrt in Anschlagstellung gegen den Rahmen (24) unter dem Einfluß des gleichen Ventils (30) gebracht zu werden, wobei die genaue Positionierung der Platte (27) bezüglich des Rahmens (24) durch Positioniermittel gewährleistet ist und daß die Gesamtheit aus wenigstens einem jenem Kontrollmodul (23) zugeordneten Taststiftes von der Platte (27) direkt oder mit Hilfe eines lösbaren Meßkopfes getragen ist, der sich mit Präzision an der Platte abstützt.

3. Vorrichtung nach einem der Ansprüche 1 bis 2, dadurch gekennzeichnet, daß ein einziges Steuerventil (8) gleichzeitig das Anheben eines in die Schurre (4, 5) ragenden Anschlages (7) ermöglicht zum Anhalten eines neuen Stücks (P) in seiner Stellung vor der Drehspindel (16) und eine zurückziehbare Gabel (13) in Arbeitsstellung bringt, die als Stütze für das Stück (P) während des Eindringens der Drehspindel (16) dient.

4. Vorrichtung nach einem der vorhergehenden Ansprüche, dadurch gekennzeichnet, daß der Rahmen (24) eines jeden Kontrollmoduls (23) U-förmig ist und den größten Teil seiner zentralen Oberfläche zum Durchgang der Taststifte freigibt, wobei die Referenzflächen des Gestells (1) zur Aufnahme des Moduls eine entsprechende Form aufweisen.

5. Vorrichtung nach einem der vorhergehenden Ansprüche, dadurch gekennzeichnet, daß die Freigabebewegung der Platte (27) eines jeden Kontrollmoduls (23) durch ein Gleitstück (26) gewährleistet ist, das auf zwei Führungsstangen (25) gleitet, die beide mit jeweils einem Ende am Rahmen (24) befestigt sind und an ihrem gegenüberliegenden Ende mittels einer Strebe (28) miteinander verbunden sind, auf der sich das Betätigungsventil (30) abstützt, dessen Stange (31) mit dem Gleitstück (26) verbunden ist, welches die Platte (27) trägt.

6. Vorrichtung nach Anspruch 5, dadurch gekennzeichnet, daß das Ventil (30) schwenkbar an der Strebe (28) angeordnet ist und daß die Verbindung zwischen dem Ende seiner Stange (31) und dem Gleitstück (26) durch ein Kopfteil gewährleistet ist, das in eine seitliche Freigabeaussparung eingreift, dessen Querschnitt ähnlich einer T-Nut ist, wobei die Gesamtanordnung durch Verschwenken des Ventils (30) gleichzeitig die Freigabe der Verbindung zwischen der Stange (31) und dem Gleitstück (26) ermöglicht und die Freigabe des entsprechenden Raums um so ein freies manuelles Zurückziehen des Gleitstücks (26) im Hinblick auf die Einstellung oder das Ersetzen der Taststifte oder des gesamten Meßkopfes zu ermöglichen.

# FIG.1

FIG.2

## FIG.3

## FIG.4